# EUROPÄISCHE PATENTSCHRIFT

(11) **EP 2 741 160 B1**
(45) Veröffentlichungstag und Bekanntmachung des Hinweises auf die Patenterteilung: **12.10.2016**
(21) Anmeldenummer: 12008193.0
(22) Anmeldetag: 07.12.2012
(51) Int. Cl.: G05D 1/02, A01D 34/00

(54) **Verfahren zur Steuerung eines selbstfahrenden Rasenmähers**
Method for controlling a self-propelled lawn mower
Procédé de commande d'une tondeuse automobile

(43) Veröffentlichungstag der Anmeldung: 11.06.2014
(73) Patentinhaber: Viking GmbH, 6336 Langkampfen (AT)
(72) Erfinder: Hans, Matthias, Dr., 83088 Kiefersfelden (DE)
(74) Vertreter: Wasmuth, Rolf

(56) Entgegenhaltungen:
- EP-A1- 2 413 214
- EP-A2- 1 612 631
- WO-A1-99/15941
- WO-A1-03/104909
- DE-A1-102010 028 251

## Beschreibung

Die Erfindung betrifft ein Verfahren zum Betrieb eines selbstfahrenden, akkubetriebenen Arbeitsgeräts, insbesondere eines selbstfahrenden Rasenmähers nach dem Oberbegriff des Anspruchs 1.

Selbstfahrende Rasenmäher an sich sind bekannt. So offenbart die EP 1 025 472 B1 ein System aus einem akkubetriebenen Rasenmäher mit einem elektrischen Fahrantrieb, der zur Bestimmung der Fahrtrichtung und der Fahrgeschwindigkeit von einer Steuereinheit angesteuert ist. Die von dem Rasenmäher zu mähende Fläche ist durch einen Randbegrenzungsdraht definiert, auf dessen Drahtschleife zeitgleich zwei Signale aufzugeben sind. Ein erstes Wechselspannungssignal schwingt mit einer ersten Frequenz und ein zweites Wechselspannungssignal schwingt mit einer doppelten Frequenz. In Empfangsspulen im Rasenmäher induzieren die wechselnden elektromagnetischen Felder der permanent gesendeten Wechselspannungssignale Empfangssignale, die von einer Auswerteeinheit derart ausgewertet werden, dass eine Aussage darüber getroffen werden kann, ob sich das Arbeitsgerät innerhalb oder außerhalb der Drahtschleife befindet. Durchläuft das erste Signal die Nulllinie, wird ein Bezugspunkt gesetzt. In diesem Zeitpunkt überprüft das System, wo das folgende Maximum des mit der doppelten Frequenz schwingenden zweiten Signals liegt. Liegt dieses auf der Plusseite, befindet sich die Empfangsspule des Robotermähers innerhalb der Drahtschleife; liegt es auf der Minusseite, befindet sich die Empfangsspule des Robotermähers außerhalb der Drahtschleife. In Abhängigkeit dieser Auswertung wird die Fahrtrichtung des Rasenmähers gesteuert.

Aus der EP 1 512 054 A1 ist eine Steuerung für einen selbstfahrenden, akkubetriebenen Rasenmäher bekannt, wobei die Feldstärke des empfangenen elektromagnetischen Feldes von auf der Drahtschleife gesendeten Signalen ausgewertet wird. Die Fahrtrichtung des Arbeitsgerätes wird nach der Empfangsstärke des Empfangssignals bestimmt.

Problematisch bei bekannten selbstfahrenden Rasenmähern ist das Auftreten zufälliger externer und interner elektromagnetischer Feldstörungen, die in der Praxis die Größenordnung der empfangenen Empfangssignale und größer erreichen können. Derartige Störungen können intern von den Antriebsmotoren des Rasenmähers oder dessen Motorleistungselektronik verursacht sein oder extern durch äußere Hochspannungsleitungen, Funksignale oder auch andere benachbarte Robotermäher hervorgerufen werden. Treten Störungen auf, wird eine präzise Bestimmung des Aufenthaltsortes des Robotermähers innerhalb oder außerhalb der Drahtschleife erschwert oder sogar unmöglich.

Der Erfindung liegt die Aufgabe zugrunde, ein Verfahren zum Betrieb eines selbstfahrenden, akkubetriebenen Arbeitsgerätes anzugeben, das mit geringem technischen Aufwand auch in Bereichen starker elektromagnetischer Feldstörungen sicher und störungsfrei arbeitet.

Die Aufgabe wird nach den Merkmalen des Anspruchs 1 gelöst.

Das auf die Drahtschleife des Randbegrenzungsdrahtes aufgegebene elektrische Signal zur Ortsbestimmung des Arbeitsgerätes ist als Signal mit einem vorgegebenen Muster ausgebildet. Das Muster ist dabei so gewählt, dass es auch bei starker Verzerrung durch elektromagnetische Störfelder noch mit einem vertretbaren technischen Aufwand erkennbar und auswertbar ist.

Die Auswerteeinheit des Arbeitsgerätes verarbeitet das Empfangssignal der Empfangsspule als Muster, wobei das Empfangssignal mit einem vorgegebenen, abgespeicherten Referenzmuster verglichen wird. Aus dem Vergleichsergebnis kann eine Information über die Lage der Empfangsspule innerhalb oder außerhalb des Randbegrenzungsdrahtes und damit über den Aufenthaltsort des Arbeitsgerätes auf der Fläche gewonnen werden. Abhängig von dem Vergleichsergebnis wird die Steuereinheit die Fahrtrichtung des Arbeitsgerätes derart mit dem Ziel ausführen, dass die Empfangsspule wieder innerhalb des Randbegrenzungsdrahtes zu liegen kommt und das Arbeitsgerät die gesamte von dem Randbegrenzungsdraht definierte Fläche bearbeitet.

Das erfindungsgemäße Verfahren ist störunempfindlich gegen zufällige externe oder interne elektromagnetische Felder. Solche Störsignale können innerhalb des Arbeitsgerätes von den Antriebsmotoren und der Motorleistungselektronik ausgelöst oder extern durch Hochspannungsleitungen, Funksignale oder benachbarte Robotersysteme hervorgerufen werden.

Das auf die Drahtschleife aufgegebene Signal ist ein Burst-Signal mit einem vorzugsweise digitalen Muster, insbesondere mit einem stochastisch digitalen Muster, welches auch unter extremen Feldstörungen sicher erkennbar bleibt. Das Muster des Burst-Signals besteht vorzugsweise aus festen High-Pegeln und festen Low-Pegeln. Das Muster wird dadurch geprägt, dass die Zeitdauer der Pegel unterschiedlich ist. Auch andere Formen und Gestaltungen eines Musters des Burst-Signals können vorteilhaft sein.

Nach der Erfindung ist zwischen aufeinanderfolgenden Burst-Signalen eine Pause vorgesehen, so dass eine der Empfangsspule nachgeschaltete Auswerteeinheit eindeutig Anfang und Ende eines Burst-Signals erkennen kann. Dadurch kann der technische Aufwand zur Auswertung der Signale gering gehalten werden. Ferner ist gewährleistet, dass das Muster in seiner Gesamtheit empfangen wird, also in seiner vollen zeitlichen Länge zur Auswertung zur Verfügung steht.

Die zeitliche Abfolge der Burst-Signale auf der Drahtschleife kann zufällig sein; zweckmäßig sind die Pausen zwischen aufeinanderfolgenden Burst-Signalen mit einer festen Zeitspanne vorgesehen.

Es kann zweckmäßig sein, in einer Pause zwischen aufeinanderfolgenden Burst-Signalen beliebige andere Signale zu senden, z. B. weitere Burst-Signale mit anderen Mustern.

In einer anderen vorteilhaften Ausgestaltung der Erfindung ist das auf dem Randbegrenzungsdraht gesendete Signal ein deterministisches analoges Wechselstromsignal mit einer Periode vorgegebener zeitlicher Länge.

Es kann zweckmäßig sein, ein zeitlich definiertes Empfangsfenster vorzugeben, innerhalb dessen der Empfang des auf der Drahtschleife gesendeten Signals in einer Empfangsspule erfolgt. Das Öffnen und das Schließen des Empfangsfensters ist vorteilhaft auf die Folge der auf der Drahtschleife gesendeten Signale bzw. deren Periodendauer abgestimmt.

Das in der Empfangsspule empfangene Empfangssignal ist eine zeitliche Ableitung U ∼ dI/dt des auf dem Randbegrenzungsdraht gesendeten Signals, wobei zur Erzielung eines aussagekräftigen Vergleichsergebnisses das Muster des Empfangssignals als Ganzes ausgewertet wird.

In vorteilhafter Weise erfolgt der Vergleich des Musters eines Empfangssignals mit einem Referenzmuster durch Korrelation. Das Ergebnis der Korrelation, also das Vergleichsergebnis, ist der Wert W eines Ausgangssignals, welches im Bereich "1" ≤ W ≤ "-1" liegt und eine Aussage über die Ähnlichkeit des Musters eines Empfangssignals mit dem Referenzmuster wiedergibt. Liegt der Wert W des Ausgangssignals bei "-1", liegt eine invertierte Übereinstimmung des Musters im Empfangssignal E1 mit dem Referenzmuster RM vor. Der Wert W = "0" gibt an, dass keine Übereinstimmung der Muster vorliegt; liegt der Wert W bei "1", ist eine vollständige Übereinstimmung des Musters im Empfangssignal mit dem Referenzmuster RM gegeben. In Abhängigkeit des Wertes W der Ähnlichkeit der miteinander verglichenen Muster ist eine Aussage möglich, ob sich die Empfangsspule des Arbeitsgerätes innerhalb der Drahtschleife (Ähnlichkeit "1") oder außerhalb der Drahtschleife (Ähnlichkeit "-1") befindet. Das Ergebnis der Korrelation ist ein Wert W im Bereich von 1 ≤ W ≤ -1; im Rahmen des Vergleichs wird ein jeweils errechnetes Ergebnis von z. B. 0,92 dem Wert "1" zugeordnet, während ein errechnetes Ergebnis von z. B. -0,86 dem Wert "-1" zugeordnet wird.

Die erfindungsgemäße Signalverarbeitung gibt die Möglichkeit, dass eine erste durch einen ersten Randbegrenzungsdraht umgebene Fläche und eine zweite durch einen zweiten Randbegrenzungsdraht umgebene Fläche einander überlappen können, ohne dass die Empfangssignale der auf den Flächen arbeitenden Arbeitsgeräte einander stören. Dabei können die Drähte auch aufeinander liegen, so dass die Drahtschleife die Form einer Acht bilden kann, z. B. bestehend aus zwei Kreisen oder Rechtecken. In der Mitte können ein gemeinsamer Draht bzw. zwei Drähte direkt aufeinander liegen. Auch diese Gestalt einer Drahtschleife wird im Sinne des Anspruchs als überlappend verstanden.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Draufsicht ein selbstfahrendes, akkubetriebenes Arbeitsgerät am Beispiel eines selbstfahrenden Rasenmähers innerhalb eines Randbegrenzungsdrahtes,
- Fig. 2: eine schematische Ansicht einer Folge der auf dem Randbegrenzungsdraht gesendeten elektrischen Signale als stochastische digitale Wechselstromsignale,
- Fig. 3: in vergrößerter Darstellung ein einzelnes Signal der Folge aus Fig. 2,
- Fig. 4: in schematischer Darstellung die in einer Empfangsspule des Arbeitsgerätes induzierten Empfangssignale,
- Fig. 5: ein Ausführungsbeispiel einer Folge von unterschiedlichen auf dem Randbegrenzungsdraht gesendeten elektrischen Signalen,
- Fig. 6: ein schematisches Ablaufdiagramm zur Auswertung der in einer Empfangsspule im Arbeitsgerät empfangenen Empfangssignale,
- Fig. 7: in schematischer Darstellung die Anordnung mehrerer sich überlappender Drahtschleifen benachbarter Systeme,
- Fig. 8: eine schematische Ansicht von auf dem Randbegrenzungsdraht gesendeten alternativen elektrischen Signalen als deterministische analoge Wechselstromsignale.

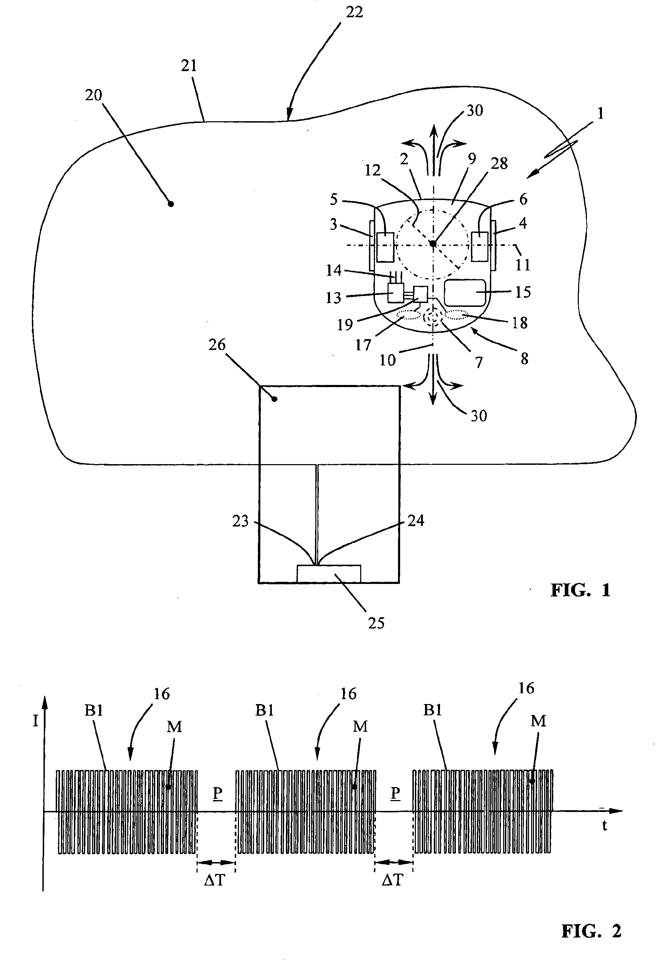

In Fig. 1 ist allgemein ein Arbeitsgerät 1 gezeigt, das im Ausführungsbeispiel als selbstfahrender Rasenmäher 2 ausgebildet ist. Das Arbeitsgerät 1 besteht im Wesentlichen aus einem Fahrwerk mit hinteren Antriebsrädern 3 und 4, denen vorzugsweise jeweils ein elektrischer Antriebsmotor 5 und 6 zugeordnet ist. In einem vorderen Bereich 8 des Gehäuses 9 des Arbeitsgerätes 1 ist ein selbstlenkendes drittes Rad 7 angeordnet. Das dritte Rad 7 liegt bevorzugt auf einer Längsmittelachse 10 des Gehäuses 9, so dass das Arbeitsgerät 1 nach Art eines Dreirades ausgebildet ist. Ein Fahrgestell mit vier Rädern kann zweckmäßig sein, wobei zwei oder mehr Räder lenkbar sein können.

Im Ausführungsbeispiel drehen die Antriebsräder 3 und 4 um eine gemeinsame Antriebsachse 11, die im Wesentlichen rechtwinklig zur Längsmittelachse 10 des Gehäuses 9 liegt. Die Antriebsräder 3, 4 sind über ihre elektrischen Antriebsmotoren 5 und 6 bei einer Geradeausfahrt synchron anzutreiben oder bei Kurvenfahrten voneinander getrennt anzutreiben, wodurch das Arbeitsgerät 1 in jede gewünschte Fahrtrichtung 30 lenkbar ist.

Zwischen den Antriebsrädern 3 und 4 ist auf der der zu bearbeitenden Fläche 20 zugewandten Seite des Fahrgestells ein Arbeitswerkzeug 12 angeordnet, im gezeigten Ausführungsbeispiel ein um eine senkrechte Drehachse 28 rotierendes Schneidmesser eines Rasenmähers 2.

Die Steuerung der elektrischen Antriebsmotoren 5 und 6 erfolgt über eine Steuereinheit 13, die über schematisch angedeutete elektrische Leitungen 14 mit den zweckmäßig getrennten Antriebsmotoren 5 und 6 verbunden ist.

Die elektrische Versorgung der Steuereinheit 13 und der Antriebsmotoren 5 und 6 wird durch einen Akkupack 15 gewährleistet, der in das Gehäuse 9 des Arbeitsgerätes 1 eingeschoben ist.

Durch entsprechende Ansteuerung der Antriebsmotoren 5 und 6 verfährt die Steuereinheit 13 das Arbeitsgerät 1 auf der zu bearbeitenden Fläche 20, die durch einen Randbegrenzungsdraht 21 umgeben ist. Der Randbegrenzungsdraht 21 ist als geschlossene Drahtschleife 22 vorgesehen, deren Enden 23 und 24 an eine Sendeeinheit 25 angeschlossen sind.

Die mit dem Randbegrenzungsdraht 21 verbundene Sendeeinheit 25 kann Teil einer Dockingstation 26 sein, in der der Akkupack 15 des Arbeitsgerätes 1 aufgeladen wird. Hierzu fährt das Arbeitsgerät 1 in die Dockingstation 26 ein, wobei elektrische Kontakte zum Aufladen des Akkupacks 15 eine Verbindung mit einem Ladegerät der Dockingstation 26 herstellen.

Die Sendeeinheit 25 speist in die Drahtschleife 22 elektrische Signale 16 ein, anhand derer das Arbeitsgerät 1 gesteuert ist. Die auf dem Randbegrenzungsdraht 21 der Drahtschleife 22 gesendete Folge von Signalen 16 ist beispielhaft in Fig. 2 dargestellt.

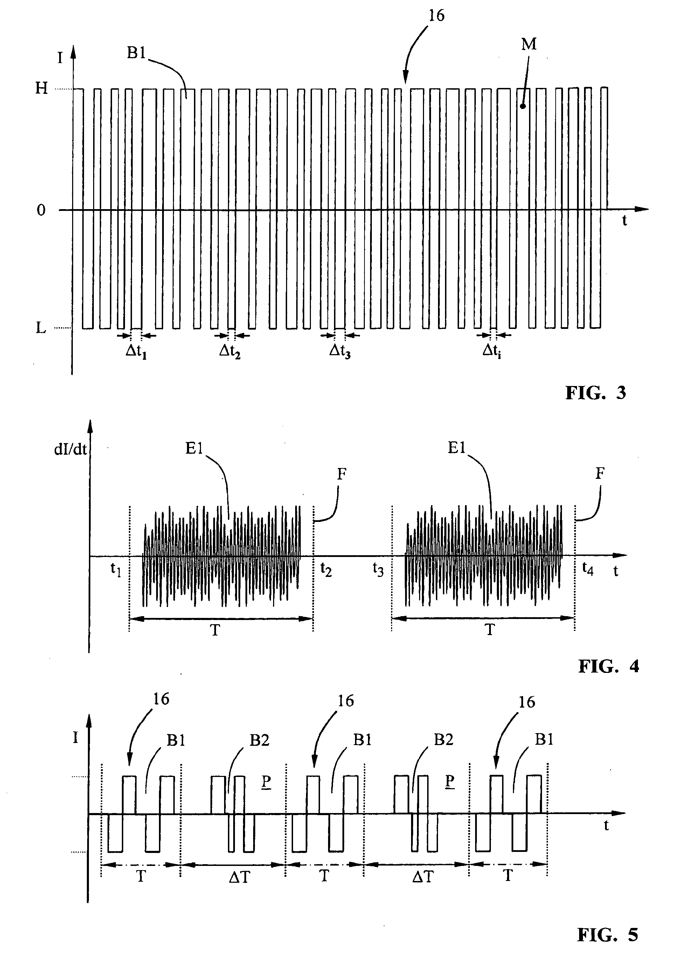

Ein Ausführungsbeispiel eines auf dem Randbegrenzungsdraht 21 der Drahtschleife 22 gesendeten elektrischen Signals 16 ist in vergrößerter Darstellung in Fig. 3 dargestellt. Das elektrische Signal 16 ist vorzugsweise als Burst-Signal B1 mit einem vorgegebenen Muster M ausgebildet. Das Muster M des Burst-Signals B1 ist ein digitales, insbesondere ein stochastisch digitales Signal, das aus festen High-Pegeln H und festen Low-Pegeln L besteht, wobei die Zeitdauer Δtᵢ der Pegel H, L unterschiedlich ist. Zwischen den einzelnen auf dem Randbegrenzungsdraht 21 der Drahtschleife 22 gesendeten Burst-Signalen B1 ist im Ausführungsbeispiel jeweils eine Pause P mit einer Pausenzeit ΔT vorgesehen.

Wie Fig. 2 zeigt, kann die Pausenzeit ΔT zwischen aufeinanderfolgenden Burst-Signalen B1 jeweils eine feste Zeitspanne haben. Es kann zweckmäßig sein, die zeitliche Abfolge der Burst-Signale auf der Drahtschleife 22 zufällig zu wählen; die Pausen P haben dann zufällige Pausenzeiten ΔT.

Das Muster M des digitalen Burst-Signals B1 wird dadurch bestimmt, dass die Zeitdauer Δt₁, Δt₂, Δt₃, ... Δtᵢ der jeweiligen Pegel H und L - wie im Ausführungsbeispiel gezeigt - unterschiedlich ausgebildet ist. Durch die Zeitdauer der Pegel H und L ist das Muster M des Burst-Signals bestimmt. Ein derartiges Burst-Signal B1 wird als Folge von Stromimpulsen mit High-Pegeln H und Low-Pegeln L unterschiedlicher Zeitdauer Δtᵢ auf den Randbegrenzungsdraht aufgegeben.

Jedes auf dem Randbegrenzungsdraht 21 gesendete elektrische Burst-Signal B1 erzeugt ein wechselndes elektromagnetisches Feld um den Randbegrenzungsdraht 21, welches von Empfangsspulen 17 und 18 im Gehäuse 9 des Arbeitsgerätes 1 empfangen wird. Im gezeigten Ausführungsbeispiel liegt im Gehäuse 9 auf jeder Längsseite der Längsmittelachse 10 des Arbeitsgerätes leine Empfangsspule 17 und 18; im Arbeitsgerät 1 können zweckmäßig weitere Empfangsspulen vorgesehen sein oder die vorgesehenen Empfangsspulen 17, 18 an anderer Stelle angeordnet sein, so z.B. auf der Längsmittelachse 10 des Arbeitsgerätes 1 je eine Empfangsspule 17 und 18 vorne und hinten.

Die in Fig. 1 dargestellten Empfangsspulen 17, 18 sind elektrisch mit der Steuereinheit 13 verbunden. Jedes auf dem Randbegrenzungsdraht 21 gesendete elektrische Signal 16 bzw. Burst-Signal B1 wird über sein erzeugtes elektromagnetisches Wechselfeld in einer Empfangsspule 17, 18 eine Wechselspannung induzieren. Das induzierte Empfangssignal E1 ist dabei die zeitliche Ableitung des auf der Drahtschleife 22 gesendeten Burst-Signals B1; das Muster des Empfangssignals E1 ist somit etwa die zeitliche Ableitung M' ∼ dI/dt des Musters M des Burst-Signals B1. Dieses Muster M' des Empfangssignals E1 (Fig. 4) wird einer Auswerteeinheit 19 zugeführt. In der Auswerteeinheit 19 werden die Muster M' der induzierten Empfangssignale E1 ausgewertet und in Abhängigkeit eines vorgenommenen Vergleichs ein Ausgangssignal generiert, das von der Auswerteeinheit 19 an die Steuereinheit 13 weitergegeben wird. Die Steuereinheit 13 steuert entsprechend dem Ausgangssignal die Antriebsmotoren 5 und 6 des Fahrantriebs und bestimmt so die Fahrtrichtung 30 (Fig. 1) des Arbeitsgerätes 1.

Das durch das Muster M des Burst-Signals B1 erzeugte elektromagnetische Feld wird immer von mindestens einer der Empfangsspulen 17 und 18 des Arbeitsgerätes 1 empfangen, wobei bei Anordnung von zwei Empfangsspulen 17, 18 das gleiche Burst-Signal B1 zeitgleich zweimal empfangen wird, das Empfangssignal E1 also doppelt vorliegt. Liegen beide Empfangsspulen 17 und 18 innerhalb oder außerhalb der Drahtschleife 22, sind die Muster M' der Empfangssignale E1 in etwa gleich; durch Verknüpfung der zeitgleich empfangenen Empfangssignale E1 können Störungen ebenso ausgefiltert werden wie Empfangslücken. Sind die empfangenen Muster M' unterschiedlich, liegt eine Empfangsspule 17 innerhalb und eine Empfangsspule 18 außerhalb der Drahtschleife 22; das Arbeitsgerät befindet sich somit über dem Randbegrenzungsdraht 21.

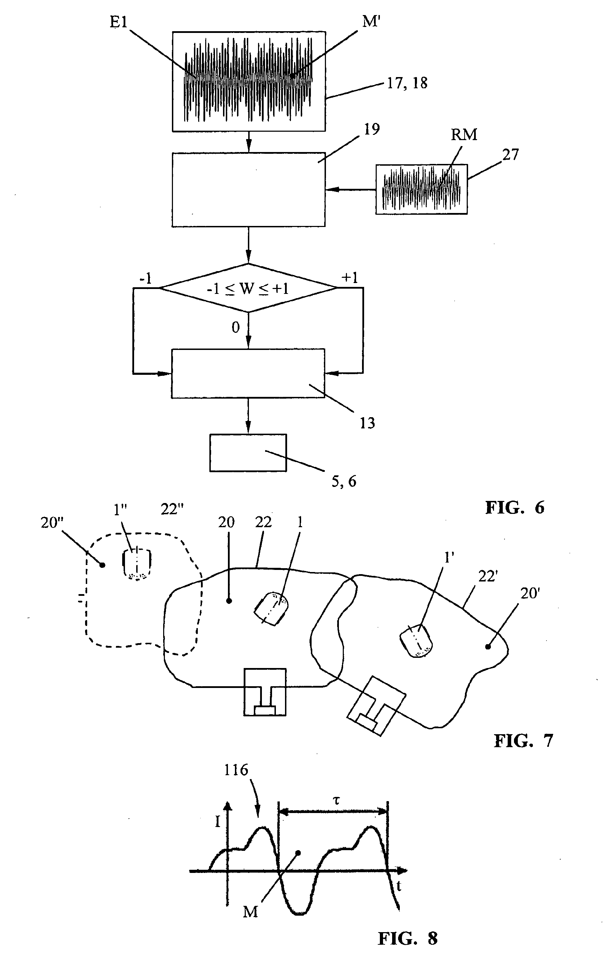

Die Auswerteeinheit 19 des Arbeitsgerätes 1 verarbeitet das Muster M' des induzierten Empfangssignals E1 jeder der Empfangsspulen 17 und 18. Dieses Muster M' entspricht etwa der zeitlichen Ableitung M' ∼ dI/dt des Musters M des auf der Drahtschleife 22 gesendeten Signals 16. In Fig. 6 ist die Verarbeitung des empfangenen Musters M' gemäß dem erfindungsgemäßen Verfahren schematisch wiedergegeben. Das elektromagnetische Feld der auf der Drahtschleife 22 gesendeten elektrischen Signale 16 induziert in den Empfangsspulen 17, 18 ein Empfangssignal E1, welches der Auswerteeinheit 19 zugeführt ist. Die Auswerteeinheit 19 vergleicht das Muster M' des Empfangssignals E1 mit einem Referenzmuster RM, welches der Auswerteeinheit 19 z. B. über einen Speicher 27 zur Verfügung gestellt ist.

Das Muster M' des Empfangssignals E1 wird mittels Korrelation ausgewertet; dabei wird die Erkennung des Referenzmusters RM in dem pseudo-stochastischen Empfangssignal E1 als Algorithmus im Frequenzbereich realisiert. Nach einem geeigneten Korrelationsverfahren wird in der Auswerteeinheit 19 permanent das von der Empfangsspule 17, 18 abgegebene Muster M' des Empfangssignals E1 mit dem Referenzmuster RM verglichen und als Ausgangssignal ein gleitendes Maß der Ähnlichkeit festgestellt. Das Ausgangssignal der Korrelation bewegt sich zwischen dem Wert W = -1 (invertierte Übereinstimmung des Musters M' im Empfangssignal E1 mit dem Referenzmuster RM), dem Wert W = 0 (keine Übereinstimmung der verglichenen Muster) und dem Wert = 1 (volle Übereinstimmung des Musters M' im Empfangssignal E1 mit dem Referenzmuster RM). Der Wert W des Ausgangssignals der Auswerteeinheit 19 wird der Steuereinheit 13 mitgeteilt, die in Abhängigkeit des Wertes W des Ausgangssignals feststellt, ob sich die Empfangsspule des Arbeitsgerätes 1 innerhalb der Drahtschleife 22 (Ähnlichkeit "1") oder außerhalb der Drahtschleife 22 (Ähnlichkeit "-1") befindet; wird kein Ähnlichkeitswert durch das Korrelationsverfahren ermittelt, wird ein Ausgangssignal "0" ausgegeben. Liegt ein Wert "0" über einen vorgegebenen Zeitraum an, wird das Arbeitsgerät 1 aus Sicherheitsgründen stillgesetzt.

Das Ergebnis der Korrelation ist nicht ein fester Wert "1" oder "-1 "; als Ergebnis werden in der Praxis beliebige Werte W in einem Bereich zwischen -1 ≤ W ≤ 1 auftreten, wobei die Werte W der Ähnlichkeit von der Auswerteeinheit 19 dann dem Zustand "1" oder "-1" zugeordnet werden. Ergibt sich ein Ähnlichkeitswert W von z. B. 0,83, so wird dieser Wert dem Zustand "1" zugeordnet; liegt der Ähnlichkeitswert W bei z. B. 0,3, ist eine zuverlässige Aussage über die Ähnlichkeit der Muster nicht möglich - es wird eine "0" ausgegeben.

In Abhängigkeit der zugeordneten Ähnlichkeitswerte "-1" und "+1" wird die Steuereinheit 13 die Fahrtrichtung des Arbeitsgerätes 1 derart steuern, dass jeweils eine Fahrtrichtung 30 gewählt wird, mit der ein Aufenthalt der Empfangsspulen 17, 18 innerhalb der Drahtschleife 22 gewährleistet ist und damit das Arbeitsgerät 1 innerhalb der zu bearbeitenden Fläche 20 gehalten wird.

Der Vergleich des Musters M' des Empfangssignals E1 mit dem Referenzsignal RM ermöglicht auf einfache Weise die Feststellung, ob der Aufenthaltsort des Arbeitsgerätes 1 innerhalb oder außerhalb des Randbegrenzungsdrahtes 21 liegt, also innerhalb oder außerhalb der Drahtschleife 22. Abhängig von dieser Information wird von der Steuereinheit 13 die Fahrtrichtung 30 des Arbeitsgerätes geändert, um das Arbeitsgerät 1 wieder innerhalb der Drahtschleife 22 zu bewegen.

Vorteilhaft empfängt eine Empfangsspule 17, 18 ein vollständiges Burst-Signal B1 in einem zeitlich vorgegebenen Empfangsfenster F der Zeitspanne T, wie es in Fig. 4 dargestellt ist. Zweckmäßig ist das Öffnen und das Schließen eines Empfangsfensters F auf die Folge der Burst-Signale B1 auf der Drahtschleife 22 abgestimmt, so dass ein Burst-Signal B1 immer vollständig empfangen wird, also ein vollständiges Muster M' innerhalb des Empfangssignals E1 abgebildet ist.

Da neben den Burst-Signalen B1 auf der Drahtschleife im Arbeitsbereich eines derartigen Arbeitsgerätes 1 regelmäßig elektromagnetische Störfelder und dgl. einstreuen, ist das Empfangssignal E1 durch entsprechende Störgrößen überlagert. Über die Korrelation ist jedoch eine sichere Erkennung des Musters M bzw. des Musters M' möglich und eine sichere Aussage darüber erzielbar, ob die Ähnlichkeit der zu vergleichenden Muster bei "-1" oder "+1" liegt, sich das Arbeitsgerät 1 also innerhalb oder außerhalb der Drahtschleife 22 bewegt.

Der zur Bestimmung der Ähnlichkeit errechnete Korrelationswert kann auch gemittelt werden und gibt so Auskunft über die Qualität des Empfangssignals E1.

Mit dem erfindungsgemäßen Verfahren können auch mehrere Burst-Signale B1, B2, ..., Bn auf einer Drahtschleife 22 gesendet werden, wie es in Fig. 5 dargestellt ist. So kann es zweckmäßig sein, in einer Pause zwischen aufeinanderfolgenden ersten Burst-Signalen B1 beliebige andere Signale, z. B. zweite Burst-Signale B2 zu senden. Die Muster der Burst-Signale B1 und B2 unterscheiden sich, wie schematisch in Fig. 5 wiedergegeben; daher kann ein erstes Arbeitsgerät 1 störungsfrei mit dem Burst-Signal B1 arbeiten, während ein gleichzeitig daneben arbeitendes Arbeitsgerät mit dem Burst-Signal B2 störungsfrei arbeitet. Eine gegenseitige Beeinflussung benachbarter Systeme kann somit durch die Wahl unterschiedlicher Muster M der Burst-Signale B1, B2 vermieden werden; dadurch eröffnet sich die Möglichkeit, einen einzigen Randbegrenzungsdraht 21 als Trennung zwischen zwei von unterschiedlichen Arbeitsgeräten zu bearbeitenden Flächen zu nutzen.

Wie in Fig. 7 dargestellt, können sich die Drahtschleifen 22, 22', 22" benachbarter Systeme auch überlappen, so dass sich zwei oder mehr auch ineinander liegende Flächen 20, 20', 20" ergeben, die von zwei oder mehreren Arbeitsgeräten 1, 1', 1" zu bearbeiten sind. Da die gesendeten Signale auf den Drahtschleifen unterschiedliche Muster haben, können sich die Arbeitsgeräte 1, 1', 1" an den ihnen zugeteilten Referenzmustern, die jeweils im Speicher 27 (Fig. 6) des jeweiligen Arbeitsgerätes 1, 1', 1" abgespeichert sind, orientieren. Jedes Arbeitsgerät 1, 1', 1" bearbeitet ausschließlich die ihm durch das abgespeicherte Referenzmuster zugeordnete Fläche 20, 20', 20", ohne dass sich die auf den Drahtschleifen 22, 22', 22" gesendeten Signale bzw. die in den Arbeitsgeräten 1, 1', 1" ausgewerteten Empfangssignale untereinander stören. Dabei ist es möglich, die Signale auf den Drahtschleifen zeitlich voneinander unabhängig zu senden, so dass die verschiedenen Muster der verschiedenen Systeme einander überlappen oder sich sogar überdecken. Aufgrund der Auswertung durch Korrelation ist dennoch eine präzise, zuverlässige Erkennung des einem Arbeitsgerät zugeordneten Musters möglich.

Auch können mit nur einem Arbeitsgerät 1 die Flächen sukzessive bearbeitet werden, indem das im Vergleich zu verwendende Referenzmuster des Arbeitsgerätes auf das entsprechende Signal der Drahtschleife 22, 22', 22" umgeschaltet wird. Je nach dem eingestellten Referenzmuster wird dasselbe Arbeitsgerät innerhalb der Drahtschleife 22 oder 22' oder 22" arbeiten. So kann mit nur einem Arbeitsgerät eine Vielzahl von Flächen selbstständig bearbeitet werden, indem z.B. eine zeitabhängige Umschaltung der zu verwendenden Referenzmuster vorgenommen wird, zweckmäßig über eine entsprechende Programmierung. So können in einem Arbeitsgerät mehrere Referenzmuster abgespeichert sein und je nach Einsatzfall ein vorgegebenes Referenzmuster zur Auswertung der Muster der Empfangssignale aktiv geschaltet werden. Dasselbe Arbeitsgerät ist so für verschiedene Systeme mit Signalen unterschiedlicher Muster verwendbar.

Das Ausführungsbeispiel wurde anhand eines quasi stochastischen digitalen Signals 16 mit aufgeprägtem Muster M erläutert. Alternativ kann als Signal 16 auch ein deterministisches analoges Signal 116 eingesetzt werden, welchem ein entsprechendes Muster M aufgeprägt ist. Ein derartiges deterministisches analoges Wechselstromsignal kann ein Signal 116 sein, wie es in Figur 8 dargestellt ist. Das Muster M des Signals 116 hat zweckmäßig eine Periode τ.

## Patentansprüche

1. Verfahren zum Betrieb eines selbstfahrenden, akkubetriebenen Arbeitsgerätes, insbesondere eines selbstfahrenden Rasenmähers, mit einem elektrischen Fahrantrieb, über den das Arbeitsgerät (1) auf einer Fläche (20) verfahren wird, wobei die Fläche (20) durch einen Randbegrenzungsdraht (21) umgeben ist, auf dem elektrische Signale (16, 116) gesendet werden, und das elektromagnetische Feld eines gesendeten Signals (16, 116) von mindestens einer Empfangsspule (17, 18) im Arbeitsgerät (1) empfangen wird und ein Empfangssignal (E1) induziert, wobei die Empfangssignale (E1) der Empfangsspule (17, 18) in einer Auswerteeinheit (19) des Arbeitsgerätes (1) ausgewertet werden, und die Auswerteeinheit (19) ein Ausgangssignal an eine Steuereinheit (13) des Arbeitsgerätes (1) abgibt, die in Abhängigkeit von dem Ausgangssignal die Fahrtrichtung des Arbeitsgerätes (1) steuert, **dadurch gekennzeichnet,**
- **dass** das elektrische Signal (16, 116) als Burst-Signal (B1) mit einem vorgegebenen Muster (M) gesendet wird,
- **dass** zwischen aufeinanderfolgenden Burst-Signalen (B1) auf dem Randbegrenzungsdraht (21) eine Pause (P) vorgesehen ist,
- **dass** die Auswerteeinheit (19) des Arbeitsgerätes (1) das in der Empfangsspule(17, 18) empfangene Empfangssignal (E1) als Muster (M') verarbeitet,
- **dass** die Auswerteeinheit (19) das Empfangssignal (E1) mit einem vorgegebenen, abgespeicherten Referenzmuster (RM) vergleicht,
- **dass** das Vergleichsergebnis eine Information über die Lage der Empfangsspule (17, 18) innerhalb oder außerhalb des Randbegrenzungsdrahtes (21) und damit über den Aufenthaltsort des Arbeitsgerätes (1) auf der Fläche (20) wiedergibt,
- und **dass** abhängig vom Vergleichsergebnis die Steuereinheit (13) die Fahrtrichtung des Arbeitsgerätes (1) steuert.

2. Verfahren nach Anspruch 1,
**dadurch gekennzeichnet, dass** das Burst-Signal (B1) mit einem digitalen Muster (M) ausgebildet ist.

3. Verfahren nach Anspruch 2,
**dadurch gekennzeichnet, dass** das digitale Muster (M)ein stochastisches digitales Muster (M) ist.

4. Verfahren nach Anspruch 2,
**dadurch gekennzeichnet, dass** das Muster (M) des Burst-Signals (B1) aus festen High-Pegeln (H) und festen Low-Pegeln (L) besteht.

5. Verfahren nach Anspruch 4,
**dadurch gekennzeichnet, dass** die Zeitdauer (Δtᵢ) der Pegel (H, L) unterschiedlich ist.

6. Verfahren nach Anspruch 1,
**dadurch gekennzeichnet, dass** die Pausen (P) zwischen aufeinanderfolgenden Burst-Signalen (B1) eine feste Zeitspanne (ΔT) ist.

7. Verfahren nach einem der Ansprüche 2 bis 5,
**dadurch gekennzeichnet, dass** die zeitliche Abfolge der Signale (16) auf dem Randbegrenzungsdraht (21) zufällig ist.

8. Verfahren nach einem der Ansprüche 1 bis 7,
**dadurch gekennzeichnet, dass** in einer Pause (P) zwischen aufeinanderfolgenden Signalen (B1) andere Signale (B2) gesendet werden.

9. Verfahren nach Anspruch 1,
**dadurch gekennzeichnet, dass** das Signal (116) ein deterministisches analoges Wechselstromsignal mit einer Periode (τ) vorgegebener zeitlicher Länge ist.

10. Verfahren nach einem der Ansprüche 1 bis 9,
**dadurch gekennzeichnet, dass** der Empfang des Signals (16, 116) in einer Empfangsspule (17, 18) in einem zeitlich vorgegebenen Empfangsfenster (F) erfolgt.

11. Verfahren nach Anspruch 10,
**dadurch gekennzeichnet, dass** das Öffnen und das Schließen des Empfangsfensters (F) auf die Folge der Signale (16, 116) auf dem Randbegrenzungsdraht (21) abgestimmt ist.

12. Verfahren nach einem der Ansprüche 1 bis 11,
**dadurch gekennzeichnet, dass** das Muster (M') des Empfangssignals (E1) die zeitliche Ableitung des Musters (M) des gesendeten Signals (16, 116) wiedergibt.

13. Verfahren nach einem der Ansprüche 1 bis 12,
**dadurch gekennzeichnet, dass** das Muster (M') des Empfangssignals (E1) als Ganzes ausgewertet wird.

14. Verfahren nach einem der Ansprüche 1 bis 13,
**dadurch gekennzeichnet, dass** der Vergleich des Musters (M') eines Empfangssignals (E1) mit einem Referenzmuster (RM) durch Korrelation erfolgt.

15. Verfahren nach Anspruch 14,
**dadurch gekennzeichnet, dass** das Vergleichsergebnis der Korrelation ein Ausgangssignal im Bereich zwischen "1" und "-1" ist.

16. Verfahren nach einem der Ansprüche 1 bis 15,
**dadurch gekennzeichnet, dass** eine erste Fläche (20) durch einen ersten Randbegrenzungsdraht (21) und eine zweite Fläche (20') durch einen zweiten Randbegrenzungsdraht (21') umgeben ist, und sich die Flächen (20, 20') überlappen.

## Claims

1. Method for operating a self-propelled, battery-operated working implement, in particular a self-propelled lawnmower having an electric travelling drive by means of which the working implement (1) is moved on a area (20), wherein the area (20) is surrounded by an edge boundary wire (21), on which electric signals (16, 116) are transmitted, and wherein the electromagnetic field of a transmitted signal (16, 116) is received by at least one reception coil (17, 18) in the working implement (1) and induces a receive signal (E1), wherein the receive signals (E1) of the reception coil (17, 18) are evaluated in an evaluation unit (19) of the working implement (1) and the evaluation unit (19) outputs an output signal to a control unit (13) of the working implement (1), which control unit (13) controls the travelling direction of the working implement (1) as a function of the output signal, **characterised in that**
- the electric signal (16, 116) is transmitted as a burst signal (B1) having a predetermined pattern (M).
- a pause (P) is provided on the edge boundary wire (21) between consecutive burst signals (B1),
- the evaluation unit (19) of the working implement (1) processes the receive signal (E1) received in the reception coil (17, 18) as a pattern (M'),
- the evaluation unit (19) compares the receive signal (E1) to a predetermined stored reference pattern (RM),
- the result of the comparison reflects data on the position of the reception coil (17, 18) within or outside the edge boundary wire (21) and thus on the location of the working implement (1) on the area (20),
- and the control unit (13) controls the travelling direction of the working implement (1) as a function of the result of the comparison.

2. Method according to claim 1,
**characterised in that** the burst signal (B1) is formed with a digital pattern (M).

3. Method according to claim 2,
**characterised in that** the digital pattern (M) is a random digital pattern (M).

4. Method according to claim 2,
**characterised in that** the pattern (M) of the burst signal (B1) consists of fixed high levels (H) and fixed low levels (L).

5. Method according to claim 4,
**characterised in that** the duration (Δtᵢ) of the levels (H, L) is different.

6. Method according to claim 1,
**characterised in that** the pause (P) between consecutive burst signals (B1) is a fixed interval (ΔT).

7. Method according to any of claims 2 to 5,
**characterised in that** the time sequence of the signals (16) on the edge boundary wire (21) is random.

8. Method according to any of claims 1 to 7,
**characterised in that** other signals (B2) are transmitted in a pause (P) between consecutive signals (B1).

9. Method according to claim 1,
**characterised in that** the signal (116) is a deterministic analogue AC signal with a cycle (τ) of a predetermined length of time.

10. Method according to any of claims 1 to 9,
**characterised in that** the signal (16, 116) is received in a reception coil (17, 18) in a reception window (F) of a predetermined time.

11. Method according to claim 10,
**characterised in that** the opening and closing of the reception window (F) is coordinated with the sequence of the signal (16, 116) on the edge boundary wire (21).

12. Method according to any of claims 1 to 11,
**characterised in that** the pattern (M') of the receive signal (E1) reflects the time-derivation of the pattern (M) of the transmitted signal (16, 116).

13. Method according to any of claims 1 to 12,
**characterised in that** the pattern (M') of the receive signal (E1) is evaluated as a whole.

14. Method according to any of claims 1 to 13,
**characterised in that** the pattern (M') of a receive signal (E1) is compared to a reference pattern (RM) by means of correlation.

15. Method according to claim 14,
**characterised in that** the comparison result of the correlation is an output signal in the range between "1" and "-1".

16. Method according to any of claims 1 to 15,
**characterised in that** a first area (20) is surrounded by a first edge boundary wire (21) and a second area (20') is surrounded by a second edge boundary wire (21'), and **in that** the areas (20, 20') overlap.

## Revendications

1. Procédé pour le fonctionnement d'une machine automobile à batterie, en particulier d'une tondeuse à gazon autoportée, avec un entraînement électrique par l'intermédiaire duquel la machine (1) est apte à être déplacée sur une surface (20), la surface (20) étant entourée par un fil de délimitation de périphérie (21) sur lequel sont envoyés des signaux électriques (16, 116), et le champ électromagnétique d'un signal (16, 116) envoyé étant reçu par au moins une bobine de réception (17, 18) dans la machine (1) et induisant un signal de réception (E1), les signaux de réception (E1) de la bobine de réception (17, 18) étant analysés dans une unité d'analyse (19) de la machine (1), et l'unité d'analyse (19) envoyant un signal de sortie à une unité de commande (13) de la machine (1), qui commande le sens de déplacement de ladite machine (1) en fonction du signal de sortie, **caractérisé**
- **en ce que** le signal électrique (16, 116) est envoyé sous la forme d'un signal de salve (B1) avec un modèle (M) prédéfini,
- **en ce qu'**une pause (P) est prévue entre les signaux de salve (B1) successifs sur le fil de délimitation de périphérie (21),
- **en ce que** l'unité d'analyse (19) de la machine (1) traite le signal de réception (E1) reçu dans la bobine de réception (17, 18) sous la forme d'un modèle (M'),
- **en ce que** l'unité d'analyse (19) compare le signal de réception (E1) à un modèle de référence prédéfini (RM) mis en mémoire,
- **en ce que** le résultat de comparaison représente une information sur la position de la bobine de réception (17, 18) à l'intérieur ou à l'extérieur du fil de délimitation de périphérie (21) et, ainsi, sur l'endroit où se trouve la machine (1) sur la surface (20),
- et **en ce qu'**en fonction du résultat de comparaison, l'unité de commande (13) commande le sens de déplacement de la machine (1).

2. Procédé selon la revendication 1,
**caractérisé en ce que** le signal de salve (B1) est pourvu d'un modèle numérique (M).

3. Procédé selon la revendication 2,
**caractérisé en ce que** le modèle numérique (M) est un modèle numérique (M) stochastique.

4. Procédé selon la revendication 2,
**caractérisé en ce que** le modèle (M) du signal de salve (B1) se compose de niveaux hauts (H) fixes et de niveaux bas (L) fixes.

5. Procédé selon la revendication 4,
**caractérisé en ce que** la durée (Δtᵢ) des niveaux (H, L) est différente.

6. Procédé selon la revendication 1,
**caractérisé en ce que** les pauses (P) entre les signaux de salve (B1) successifs sont constituées par un laps de temps (Δt) fixe.

7. Procédé selon l'une des revendications 2 à 5,
**caractérisé en ce que** la succession temporelle des signaux (16) sur le fil de délimitation de périphérie (21) est aléatoire.

8. Procédé selon l'une des revendications 1 à 7,
**caractérisé en ce que** pendant une pause (P) entre des signaux (B1) successifs, d'autres signaux (B2) sont envoyés.

9. Procédé selon la revendication 1,
**caractérisé en ce que** le signal (116) est un signal de courant alternatif analogique déterministe avec une période (τ) d'une longueur temporelle prédéfinie.

10. Procédé selon l'une des revendications 1 à 9,
**caractérisé en ce que** la réception du signal (16, 116) dans une bobine de réception (17, 18) se fait dans une fenêtre de réception (F) prédéfinie dans le temps.

11. Procédé selon la revendication 10,
**caractérisé en ce que** l'ouverture et la fermeture de la fenêtre de réception (F) est adaptée à la succession des signaux (16, 116) sur le fil de délimitation de périphérie (21).

12. Procédé selon l'une des revendications 1 à 11,
**caractérisé en ce que** le modèle (M') du signal de réception (E1) représente la dérivée temporelle du modèle (M) du signal (16, 116) envoyé.

13. Procédé selon l'une des revendications 1 à 12,
**caractérisé en ce que** le modèle (M') du signal de réception (E1) est analysé dans son ensemble.

14. Procédé selon l'une des revendications 1 à 13,
**caractérisé en ce que** la comparaison du modèle (M') d'un signal de réception (E1) à un modèle de référence (RM) se fait par corrélation.

15. Procédé selon la revendication 14,
**caractérisé en ce que** le résultat de comparaison de la corrélation est un signal de sortie dans la plage entre "1" et "-1".

16. Procédé selon l'une des revendications 1 à 15,
**caractérisé en ce qu'**une première surface (20) est entourée par un premier fil de délimitation de périphérie (21) tandis qu'une seconde surface (20') est entourée par un second fil de délimitation de périphérie (21'), et les surfaces (20, 20') se chevauchent.
